Europäisches Patentamt

European Patent Office

Office européen des brevets

(19)

(11) Veröffentlichungsnummer: **0 296 260**
**B1**

(12)

# EUROPÄISCHE PATENTSCHRIFT

(45) Veröffentlichungstag der Patentschrift:
14.11.90

(51) Int. Cl.⁵: **A01K 5/02**

(21) Anmeldenummer: 87108888.6

(22) Anmeldetag: **22.06.87**

(54) **Fütterungseinrichtung für Viehfutter.**

(43) Veröffentlichungstag der Anmeldung:
28.12.88 Patentblatt 88/52

(45) Bekanntmachung des Hinweises auf die Patenterteilung:
14.11.90 Patentblatt 90/46

(84) Benannte Vertragsstaaten:
AT CH DE ES FR GB GR IT LI NL SE

(56) Entgegenhaltungen:
EP-A- 0 163 080

(73) Patentinhaber: WEDA-Dammann & Westerkamp GmbH,
D-2849 Goldenstedt 2 - Lutten(DE)

(72) Erfinder: **Fahlbusch, Klaus, Paul-Keller-Strasse 19,**
**D-2848 Vechta i.O.(DE)**

(74) Vertreter: **Busse & Busse Patentanwälte,**
**Postfach 1226 Grosshandelsring 6,**
**D-4500 Osnabrück(DE)**

## Beschreibung

Die Erfindung bezieht sich auf eine Fütterungseinrichtung zum Aufbereiten und Zuführen von pumpfähigen Viehfuttermischungen zu Verbraucherstellen in einer Ausbildung gemäß dem Oberbegriff des Patentanspruchs 1.

Bei einer bekannten Fütterungseinrichtung dieser Art (DE-A-3 419 842) ist das die Hauptvorlaufleitung und die Verbraucherleitung(en) umfassende Rohrleitungssystem vor Beginn eines Fütterungsvorganges mit Wasser gefüllt, während der Speicherbehälter leer ist. Soll nun eine Futtermenge einer bestimmten Verbraucherstelle zugeführt werden, so wird diese im Mischbehälter zubereitet und aus diesem bis zu der Abzweigung der Verbraucherleitung für die gewünschte Verbraucherstelle vorgefördert, wobei die Futtersäule das in den Leitungsteilen als Vorfüllung enthaltene Wasser fortschreitend in den Speicherbehälter verdrängt. Sobald das Vorlaufende der Futtersäule die Abzweigung zur gewünschten Verbraucherstelle gerade passiert hat, wird der Übergang zum Speicherbehälter durch Schließen eines Steuerventils gesperrt, die Abzweigung zur Verbraucherstelle geöffnet und die Futterförderung fortgesetzt. Leert sich im Zuge der Beschickung der Verbraucherstelle der Mischbehälter, was durch dessen Wiegevorrichtung festgestellt wird, so wird durch Öffnen eines Steuerventils eine Verbindungsleitung zwischen dem Speicherbehälter und dem Mischbehälter freigegeben und das in den Speicherbehälter verdrängte Wasser in den Mischbehälter überführt. Bei fortgesetzter Förderung wird in unmittelbarem Anschluß an das rückwärtige Ende der Futtersäule dieser nun das vorlaufende Ende einer Wassersäule nachgeschoben, welche das Futter fortschreitend in den Leitungsteilen verdrängt und dabei der Verbraucherstelle zufördert. Befindet sich das Vorlaufende der Wassersäule dicht vor der Abzweigung in der Verbraucherleitung, wird die Verbindung zur Verbraucherstelle geschlossen. Zu diesem Zeitpunkt ist das gesamte Rohrleitungssystem praktisch wieder mit Wasser gefüllt.

Eine derartige Fütterungseinrichtung ermöglicht es, die Verbraucherstellen stets mit frisch zubereitetem Futter zu versorgen, das warm oder kalt verfütterbar ist und ohne weiteres Bestandteile enthalten kann, die bei Auskühlung oder bei längeren Ruhezeiten in Behältern oder Rohrleitungen aushärten würden.

Während der Fördervorgänge stehen jedoch Futter und Wasser an den Grenzstellen der jeweiligen Mediensäulen in direktem Kontakt, so daß bei bestimmten Futterrezepturen unerwünschte Vermischungen auftreten können.

Der Erfindung liegt die Aufgabe zugrunde, eine Fütterungseinrichtung zu schaffen, bei der Vermischungen zwischen Futter und Wasser im Rohrleitungssystem zumindest weitgehend vermieden sind.

Ausgehend von einer Fütterungseinrichtung nach dem Oberbegriff des patentanspruchs 1 löst die Erfindung diese Aufgabe mit den im kennzeichenden Teil des patentanspruchs 1 angegebenen Merkmalen. Hinsichtlich wesentlicher weiterer Ausgestaltungen wird auf die Patentansprüche 2 bis 14 verwiesen.

Bei der erfindungsgemäßen Fütterungseinrichtung schließen die Trennkörper eine direkte Berührung von Futter und Wasser bei der Futterförderung zu Verbraucherstellen aus, so daß Vermischungen mit den das Leitungssystem vorfüllenden Wasser vermieden sind. Die an ihrem Umfang in Dichtungseingriff mit der Rohrwandung der Verbraucherleitung stehenden Trennkörper stellen ferner sicher, daß die häufig sehr lange Verbraucherleitung von wandseitigen Futterablagerungen freibleibt, die nicht nur frisch zubereitetes Futter kontaminieren können, sondern auch den Pumpwiderstand erhöhen. Die hydraulisch verschieblichen Trennkörper sind sehr genau positionierbar. Sie können zusätzlich auch als Befehls- und/oder Informationsträger Verwendung finden, der sowohl auf seinem Wege aus der Ausgangsstellung in eine Endstellung, als auch auf dem Rückweg Signale abgibt und/oder aufnimmt, wie das z.B. zu Kontroll- oder Steuerungszwecken der Fütterungseinrichtung oder damit im Zusammenhang stehender Einrichtungen wünschenswert sein kann.

Ein Ausführungsbeispiel des Gegenstands der Erfindung ist in der Zeichnung schematisch näher veranschaulicht.

In der Zeichnung zeigen:

Fig. 1 eine schematische Darstellung einer Fütterungseinrichtung nach der Erfindung, und

Fig. 2 einen abgebrochenen Schnitt durch die Verbraucherleitung zur Veranschaulichung eines Trennkörpers.

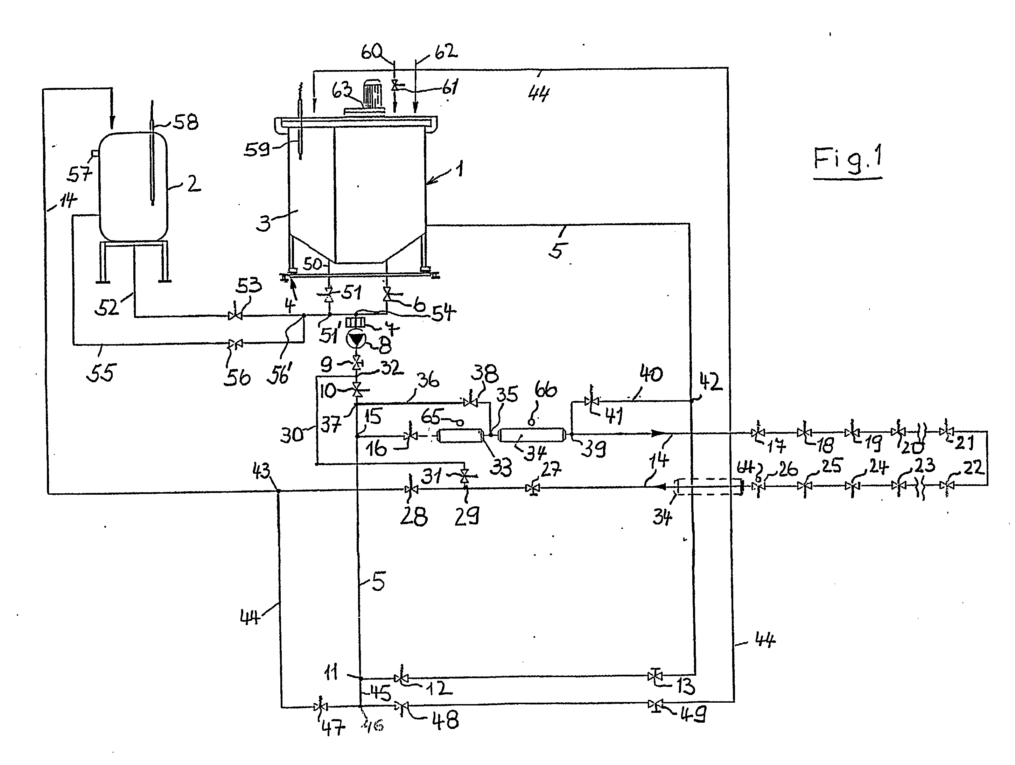

Die in Fig. 1 schematisch veranschaulichte Fütterungseinrichtung umfaßt im einzelnen einen Mischbehälter 1, einen Speicherbehälter 2 für Wasser und einen Zusatzbehälter 3 ebenfalls für Wasser, der bei dem dargestellten Beispiel von einem Abteil des Mischbehälters 1 gebildet ist. Der Mischbehälter 1 und mit diesem der Zusatzbehälter 3 sind auf einer Wiegevorrichtung 4 abgestützt, mittels der das Gewicht des jeweiligen Inhalts sowohl des Mischbehälters 1 als auch des Zusatzbehälters 3 exakt bestimmbar ist, und zwar sowohl bei den jeweiligen Befüllungsvorgängen, als auch bei den jeweiligen Entleerungsvorgängen. Die jeweils ermittelten Gewichtsdaten werden von der Wiegevorrichtung 4 einem nicht näher veranschaulichten Zentralgerät gemeldet, das sämtliche Funktionen, Meßdaten und Signale der Fütterungseinrichtung empfängt, mittels Computer auswertet und im Zuge einer Programmsteuerung die für den gewünschten Betrieb der Fütterungseinrichtung jeweils benötigten Befehle bzw. Signale ausgibt.

Die Fütterungseinrichtung gemäß Fig. 1 umfaßt ferner eine aus dem Mischbehälter 1 bodenseitig ausmündende Hauptvorlaufleitung 5, die als zum Mischbehälter 1 zurückgeführte Ringleitung ausgebildet ist. Der Hauptvorlaufleitung ist ein Steuerventil 6 an ihrer Ausmündung aus dem Mischbehälter 1 und eine Durchlauf-Mengenmeßvorrichtung 7 im Bereich unmittelbar vor oder hinter einer in die Hauptvorlaufleitung 5 eingeschalteten Förderpumpe 8 zugeordnet. Ferner weist die Hauptvorlaufleitung 5 ein der Förderpumpe 8 nachgeordnetes Handdrosselventil 9, ein diesem nachgeordnetes Steuerventil 10, ein weiteres, einem Verzweigungspunkt 11 nachgeordnetes Steuerventil 12 und schließlich ein diesem nachgeordnetes Handdrosselventil 13 auf.

Weiterhin umfaßt die Fütterungseinrichtung gemäß Fig. 1 zumindest eine Verbraucherleitung 14, die am Verzweigungspunkt 15 an die Hauptvorlaufleitung 5 angeschlossen ist und von oben in den Speicherbehälter 2 einmündet. Diese Verbraucherleitung 14 besitzt unmittelbar stromab des Verzweigungspunktes 15 ein Steuerventil 16, hat einen Verlauf, der sich beliebig an Stallungsgegebenheiten orientiert, und besitzt eine frei wählbare und den jeweiligen Erfordernissen anpaßbare Zahl von Abzweigungen zu Verbraucherstellen, die in der Zeichnung durch die diesen Abzweigungen zugeordneten Steuerventile 17 bis 26 versinnbildlicht sind. Stromab der Abzweigung 26 für die letzte Verbraucherstelle ist in die Verbraucherleitung ein Handdrosselventil 27 und ein Steuerventil 28 eingeschaltet, das stromab eines Verzweigungspunktes 29 gelegen ist. An diesem mündet eine Umgehungsleitung 30 ein, die mit einem eigenen Steuerventil 31 versehen ist und an einem Verzweigungspunkt 32 aus der Hauptvorlaufleitung 5 stromauf des in dieser angeordneten Steuerventils 10 ausmündet.

In der Verbraucherleitung 14 sind zwei Trennkörper 33, 34 angeordnet, die mit der Rohrwand in Dichtungseingriff stehen und mittels des von der Förderpumpe 8 geförderten Fördermediums aus ihrer in Fig. 1 veranschaulichten Ausgangsstellung am Anfang der Verbraucherleitung 14 in wählbare Endstellungen innerhalb der Verbraucherleitung 14 und aus diesen wieder zurück in ihre Ausgangsstellung verschiebbar sind. In ihrer Ausgangsstellung liegen die beiden Trennkörper 33, 34 dicht hintereinander, wie das die Fig. 1 versinnbildlicht, und in den Bereich der Verbraucherleitung 14 zwischen den einander zugewandten Enden der Trennkörper 33, 34 mündet an einem Verzweigungspunkt 35 eine Umgehungsleitung 36 ein, die an einem Verzweigungspunkt 37 stromab des Steuerventils 10 aus der Hauptvorlaufleitung 5 ausmündet und ein eigenes Steuerventil 38 besitzt. Unmittelbar stromab des vorderen Endes des zweiten Trennkörpers 34 mündet aus der Verbraucherleitung 14 an einem Verzweigungspunkt 39 eine Umgehungsleitung 40 mit einem eigenen Steuerventil 41 aus, die an einem Verzweigungspunkt 42 in die Hauptvorlaufleitung 5 in deren Bereich vor dem Mischbehälter 1 einmündet.

Stromab des Steuerventils 28 ist an einem Verzweigungspunkt 43 an die Verbraucherleitung 14 eine Umgehungsleitung 44 angeschlossen, die von oben in den Zusatzbehälter 3 einmündet. Diese Umgehungsleitung 44 steht über eine Verbindungsleitung 45 mit der Hauptvorlaufleitung 5 in Verbindung, welche sich vom Verzweigungspunkt 11 in der Hauptvorlaufleitung 5 zu einem Verzweigungspunkt 46 in der Umgehungsleitung 44 erstreckt. Beidseits· des Verzweigungspunktes 46 ist in der Umgehungsleitung 44 je ein Steuerventil 47,48 angeordnet, und zwischen letzterem und der Einmündung der Umgehungsleitung 44 in den Zusatzbehälter 3 befindet sich noch ein Handdrosselventil 49.

Aus dem Bodenbereich des Zusatzbehälters 3 mündet eine Verbindungsleitung 50 aus, in der ein Steuerventil 51 angeordnet ist. Diese Verbindungsleitung mündet am Verzweigungspunkt 51' in eine Verbindungsleitung 52 mit eigenem Steuerventil 53 ein, welche den Bodenbereich des Speicherbehälters 2 mit der Hauptvorlaufleitung 5 verbindet, an die sie im Verzweigungspunkt 54 angeschlossen ist. Aus dem unteren Bereich des Speicherbehälters 2 mündet im Abstand oberhalb des Behälterbodens seitlich eine weitere Verbindungsleitung 55 mit eigenem Steuerventil 56 aus, die am Verzweigungspunkt 56' an die Verbindungsleitung 52 angeschlossen ist, und zwar zwischen dem Steuerventil 53 und dem Verzweigungspunkt 51'. Über diese Verbindungsleitungen 50,52,55 sind wahlweise der Zusatzbehälter 3 und der Speicherbehälter 2 mit der Hauptvorlaufleitung 5 auf der Saugseite der Förderpumpe 8 verbindbar.

Der Speicherbehälter 2 ist in seinem oberen Bereich mit einem Überlauf 57 versehen, der einen oberen Füllstand vorgibt, und umfaßt eine Füllstandssonde 58, die bei Erreichen oder Unterschreiten eines unteren Füllstandes ein Steuersignal abgibt.

Auch der Zusatzbehälter 3 weist eine Füllstandssonde 59 auf, die bei Erreichen oder Überschreiten eines oberen Füllstandes ein Steuersignal abgibt. Der Mischbehälter 1 ist mit einer Zulaufleitung 60 mit Steuerventil 61 an eine Frischwasserquelle angeschlossen und im übrigen über Zulaufleitungen, von denen eine bei 62 angedeutet ist, von nicht dargestellten Vorratsbehältern her mit jeweils gewünschten Bestandteilen der zuzubereitenden Futtermittelmischung beschickbar. Auch in derartigen Zulaufleitungen sind eigene Steuerventile vorgesehen. Schließlich umfaßt der Mischbehälter 1 eine Rührwerk, daß mit seinem Antrieb 63 angedeutet ist und im Innern des Mischbehälters 1 umlaufende Rühr- und Mischwerkzeuge umfaßt.

In der Betriebsausgangsstellung ist der Mischbehälter 1 leer, und der Speicherbehälter 2 sowie der Zusatzbehälter 3 sind bis zu ihrem vorgegebenen oberen Füllstand mit Wasser gefüllt. Die Wassermenge im Speicherbehälter 2 kann dabei etwa 130% des gesamten Leitungsfüllvolumens der Fütterungseinrichtung entsprechen, und die Wassermenge im Zusatzbehälter 3 entspricht vorzugsweise etwa 100% des gesamten Leitungsfüllvolmens.

In der Anmischphase für Futter wird zunächst Wasser über die Verbindungsleitung 52 und die Vorlaufleitung 5 in den Mischbehälter 1 gefördert, wobei nach einer einstellbaren Zeit und vor Erreichen des unteren Füllstands im Speicherbehälter 2 die weitere Förderung von Wasser aus diesem über die Verbindungsleitung 55 vorgenommen wird, was durch Schließen des Steuerventils 53 und Öffnen des Steuerventils 56 zu bewerkstelligen ist. Sobald die Füllstandessonde 58 des Speicherbehälters 2 bei Erreichen des unteren Füllstandes ihr Steuersignal abgibt, wird das Steuerventil 56 geschlossen und das Steuerventil 61 geöffnet, wonach weiter benötigtes Wasser entsprechend der Rezepturvorgabe als Frischwasserquelle zugeführt wird. Sobald die Wiegevorrichtung 4 das Erreichen vorgegebenen Wassermenge im Mischbehälter 1 meldet, wird das Steuerventil 61 geschlossen und der Wasserzulauf unterbrochen. Alsdann werden über Zuläufe 62 nacheinander die vorgegebenen Mengen an Futterbestandteilen dem Mischbehälter 1 zugeführt. Auch hierbei erfolgt die Mengenbemessung jeweils mit Hilfe der Wiegevorrichtung 4. Ist die vorgegebene Gesamtfuttermenge im Mischbehälter 1 enthalten und durchmischt, kann sie grundsätzlich Verbraucherstellen zugeführt werden.

Zuvor aber wird in einer sich anschließenden Vorfütterungsphase nun zunächst die Hauptvorlaufleitung 5 mit Futter gefüllt und das in dieser befindliche Wasser in den Mischbehälter 1 verdrängt, wo es zum Bestandteil der Futtermenge wird. Dies ist bei der Bemessung der Menge an Anmischwasser bereits berücksichtigt. Für dieses Füllen der Hauptvorlaufleitung 5 mit Futter werden deren Steuerventile 6, 10 und 12 geöffnet, wobei es sich versteht, daß die Handdrosselventile 9 und 13 ebenso wie die übrigen Handdrosselventile des Rohrleitungssystems geöffnet sind. Danach wird das Steuerventil 38 in der Umgehungsleitung 36 geöffnet und Futter in den Bereich zwischen die Trennkörper 33,34 gepumpt. Hierdurch verschiebt sich der Trennkörper 34 in Richtung auf die erste Abzweigung 17 in der Verbraucherleitung 14, da gleichzeitig mit dem Öffnen des Steuerventils 38 auch das Steuerventil 28 geöffnet wird. Sobald der Trennkörper 34 den Verzweigungspunkt 39 passiert hat, wird das Steuerventil 28 geschlossen und das Steuerventil 41 geöffnet, so daß nunmehr bei geschlossenem Steuerventil 12 Futter die Leitungen 36 und 40 füllt und das in diesen enthaltene Wasser ebenfalls in den Mischbehälter 1 verdrängt. Auch das in diesen Leitungsteilen enthaltene Wasser findet bei der Anmischwasserbemessung Berücksichtigung. Zu erwähnen ist, daß das Füllvolumen der Leitungen 5,36,40 ebenso wie der gesamten übrigen Leitungen mit Ausnahme der Verbraucherleitung 14 von Hause aus sehr gering ist, da sie relativ kurz sind.

Nach Schließen des Steuerventils 41 und Öffnen des Steuerventils 28 wird nun durch das von der Förderpumpe 8 über die Umgehungsleitung 36 geförderte Futter der Trennkörper 34 fortschreitend in eine Stellung verschoben, die ihm als Endstellung für einen Fütterungsvorgang vorgegeben ist. Diese Endstellung befindet sich stets unmittelbar hinter der in Strömungsrichtung des Futters letzten Abzweigung, aus der während des Fütterungsvorganges Futter an eine Verbraucherstelle abgegeben werden soll. Die Fig. 1 veranschaulicht den Trennkörper 34 gestrichelt in einer Endstellung, in der er sich unmittelbar stromab der Abzweigung 26 befindet, jedoch kann auch eine Endstellung hinter jeder anderen Abzweigung in Frage kommen.

Die Positionierung des Trennkörpers 34 in seiner vorgegebenen Endstellung erfolgt hydraulisch, nämlich durch Schließen des Steuerventils 28, durch das eine weitere Verdrängung des stromab des zweiten Trennkörpers 34 in der Verbraucherleitung 14 enthaltenen Wassers in den Speicherbehälter 2 unterbunden und damit der Trennkörper 34 gestoppt wird. Das für das Schließen des Steuerventils 28 verantwortliche Steuersignal - das wie alle Signale vom Zentralgerät kommt - kann durch die Durchlauf-Mengenmeßvorrichtung 7 ausgelöst werden, die nach Schließen des Steuerventils 41 und Öffnen des Steuerventils 28 auf Null gestellt werden kann und das nachfolgend geförderte Futtervolumen erfaßt, das für jede gewünschte Endstellung ohne weiteres ermittelbar ist. Statt dessen kann das Steuersignal auch durch jeder gewünschten Endstellung zugeordnete Signalempfänger ausgelöst werden, von denen einer im Bereich der Abzweigung 26 dargestellt und mit 64 bezeichnet ist. Der Signalempfänger, der der gewünschten Endstellung für den Trennkörper 34 zugeordnet ist, gibt sein Steuersignal an das Zentralgerät zur Auslösung eines Schließsignals für das Steuerventil 28 ab, wenn der Trennkörper 34 den Signalempfänger passiert. Ähnliche Signalempfänger sind der Verbraucherleitung 14 auch im Bereich der Ausgangsstellungen für die Trennkörper 33, 34 zugeordnet und mit 65 bzw. 66 bezeichnet.

Unmittelbar mit dem Schließen des Steuerventils 28 und der dadurch gegebenen hydraulischen Verriegelung des Trennkörpers 34 in seiner gewünschten Endstellung öffnet das an der in Strömungsrichtung ersten Abzweigung, an der Futter einer zugehörigen Verbraucherstelle zugeführt werden soll, angeordnete Steuerventil, z.B. das Steuerventil 18, bis eine für diese Verbraucherstelle vorgegebene Teilfuttermenge, die durch die Wiegevorrichtung 4 und/oder durch die Meßvorrichtung 7 erfaßt wird, abgegeben ist. Als letztes Steuerventil für eine Futterabgabe wird schließlich das unmittelbar vor dem in Endstellung befindlichen Trennkörper 34 gelegene Steuerventil, bei dem dargestellten Beispiel in Fig. 1 das Steuerventil 26, geöffnet und die Beschickung dieser letzten Verbraucherstelle vorgenommen. Dabei oder auch schon vorher entleert sich der Mischbehälter 1, und ein dadurch ausgelöstes Signal schließt nun das Steuerventil 6, während das Steuerventil 51 geöffnet und damit die Verbindung des Zusatzbehälters 3 mit der Hauptvorlaufleitung 5 hergestellt wird. Etwa gleichzeitig wird das Steuerventil 38 geschlossen und das Steuerventil 16 geöffnet mit der Folge, daß das nun von der Förderpumpe 8 in der Hauptvorlaufleitung 5 vorgeförderte Wasser bei 15 stromauf des ersten Trennkörpers 33 in die Verbraucherleitung 14 eintritt und den ersten Trennkörper 33 aus seiner Ausgangsstellung entlang der Verbraucherleitung 14 solange vorschiebt, bis auch dieser seine Endstellung dicht hinter dem zweiten Trennkörper 34 erreicht hat. Bei diesem Vorlauf in seine Endstellung verdrängt der erste Trennkörper 33 das vor ihm in der Verbraucherleitung 14 befindliche Futter, das dadurch praktisch restlos an der Abzweigung 26 ausgegeben wird.

Durch Schließen des Steuerventils 16 und Öffnen der Steuerventile 38,41 können nun zunächst die Leitungen 36,40 und nach entsprechender Ventilbetätigung auch der übrige Teil der Vorlaufleitung 5 von Wasser durchspült und mit Wasser gefüllt werden, wobei sich das aus Wasser und Restfutter bestehende Gemisch im Mischbehälter 1 ansammelt.

Danach kann die Vorlaufleitung 5 durch Schließen des Steuerventils 10 und Öffnen des Steuerventils 31 mit der Verbraucherleitung 14 verbunden und stromab des zweiten Trennkörpers 34 eine der Futterströmungsrichtung entgegengesetzte Wasserströmung erzeugt werden, durch die die Trennkörper 34,33 gemeinschaftlich in ihre Ausgangsstellung zurückgesetzt werden. Anschließend wird das Wasser-Restfutter-Gemisch aus dem Mischbehälter 1 über Teile der Leitungen 5,44,14 in den Speicherbehälter 2 gepumpt, wobei nach Entleerung des Mischbehälters 1 der weitere Pumpvorgang im Kreislauf aus dem Speicherbehälter 2 und in diesen zurück erfolgt. Nach Beendigung dieses Vorganges wird der Zusatzbehälter 3 mit Frischwasser befüllt, das in den Mischbehälter 1 eingegeben und über Teile der Leitungen 5,44 in den Zusatzbehälter 3 gefördert wird.

Das gesamte Rohrleitungssystem der Fütterungseinrichtung ist jetzt wieder mit Wasser gefüllt, ebenso der Zusatzbehälter 3, dessen Füllstandssonde 59 den Füllvorgang des Zusatzbehälters 3 beendet. Etwa im Mischbehälter 1 zu diesem Zeitpunkt noch enthaltenes Frischwasser wird durch Umschaltung der Leitungsverbindungen in den Speicherbehälter 2 gefördert. In diesem setzt sich im unteren Bereich die Restfuttermenge ab, während überschüssiges Wasser über den Überlauf 57 ablaufen kann.

Beim nächsten Fütterungsvorgang wiederholen sich die vorbeschriebenen Vorgänge, wobei mit der Überführung des Wassers aus dem Speicherbehälter 2 in den Mischbehälter 1 zugleich auch das im unteren Bereich abgesetzte Restfutter in den Mischbehälter 1 überführt und bei dem Anmischen der nächsten Futtermenge mitverwertet wird. Auch diese Mitverwertung kann bei der Gewichtsvorgabe für die Futterbestandteile der nächsten Charge Berücksichtigung finden.

Wie dem Vorstehenden unschwer zu entnehmen ist, verhindern die Trennkörper 33, 34 eine Vermischung des den Verbraucherstellen zuzufördernden Futters mit dem das Rohrleitungssystem füllenden und schließlich als Schubmittel Verwendung findenden Wasser, während gleichzeitig die Trennkörper 33, 34 bei jeder Verschiebebewegung zugleich eine Reinigungswirkung ausüben, die ein Zuwachsen der Verdrängerleitung vermeidet.

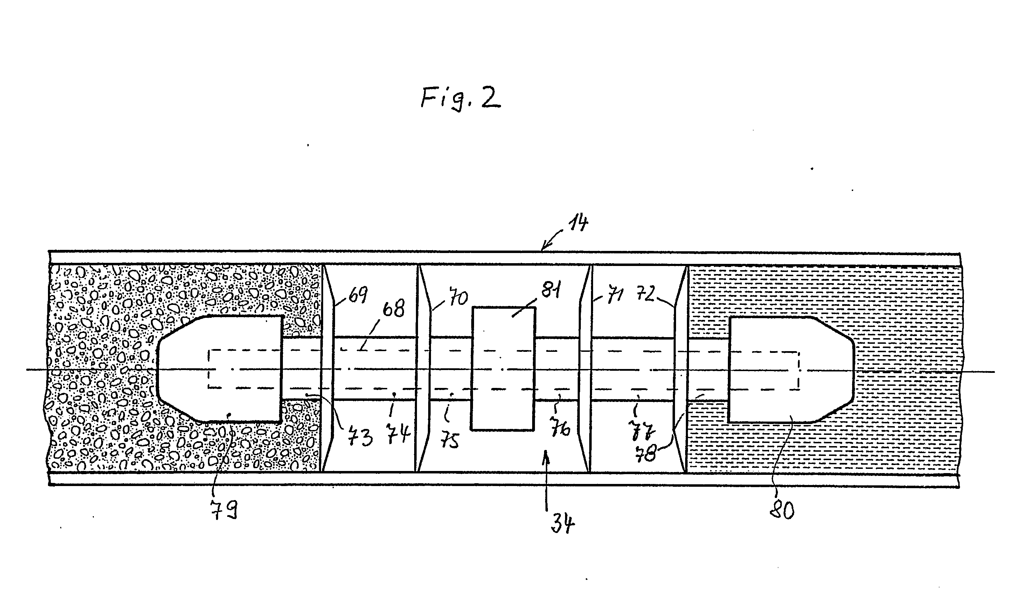

Wie der Fig. 2 näher entnommen werden kann, die von den untereinander gleichen Trennkörpern 33, 34 den letzteren veranschaulicht, umfaßt jeder Trennkörper 33, 34 einen biegsamen Mittelteil 68, der bevorzugt von einer Drahtseele gebildet sein kann. Auf dem Mittelteil 68 sind eine Anzahl, bei dem dargestellten Beispiel zwei Paare, von Dichtungsscheiben 69-72 angebracht, die durch Distanzhülsen 73-78 fixiert sind. Den Zusammenhalt der Teile sichern Kopfstücke 79-80 auf den Enden des Mittelteils 68, die aufgeschraubt sein können. Die Dichtungsscheiben 69-72 bestehen aus relativ festem Kunststoff, z.B. Polypropylen, der auch für die Distanzhülsen 73-78 Verwendung finden kann. Zumindest einer der beiden Trennkörper 33,34, bevorzugt aber beide, sind mit einem Signalgeber 81 versehen, der von einem auf dem Mittelteil 68 zwischen den Dichtungsscheiben 70,71 angeordneten Dauermagneten oder auch von einem aktiven oder passiven, d.h. von außen aktivierbaren Sender gebildet sein kann. Statt dessen oder zusätzlich kann jeder der Trennkörper 33,34 auch mit einem nicht näher veranschaulichten Signalempfänger und einem mit diesem gekoppelten, abfragbaren Signalspeicher versehen sein, so daß die Trennkörper 33,34 nach Belieben als Befehlsgeber, Datenübermittler und Informationsträger eingesetzt werden können. Dies ist insbesondere bei Fütterungseinrichtungen in Stallanlagen von Interesse, die sehr weit verzweigt sind und dementsprechend eine lange Verbraucherleitung 14, ggf. mehrere Verbraucherleitungen 14 großer Länge, aufweisen. In solchen Fällen können entsprechend lange Datenübertragungs- bzw. Signalleitungen eingespart werden.

**Patentansprüche**

1. Fütterungseinrichtung zum Aufbereiten und Zuführen von pumpfähigen Viehfuttermischungen zu Verbraucherstellen, mit einem Mischbehälter (1), der eine Wiegevorrichtung (4) und ein Rührwerk umfaßt und aus Vorratsbehältern mit Futterbestandteilen beschickbar ist, mit einer Hauptvorlaufleitung (5), in die eine Förderpumpe (8) und eine Durchlauf-Mengenmeßvorrichtung (7) eingeschaltet ist, mit zumindest einer Verbraucherleitung (14), die von der Hauptvorlaufleitung (5) her mit einem pumpfähigen Fördermedium beaufschlagbar ist und Abzweigungen (17-26) zu Verbraucherstellen aufweist, mit einem Speicherbehälter (2), der von der Verbraucherleitung (14) her mit Wasser beschickbar ist, mit einer Anzahl von Steuerventilen, mittels denen die Rohrleitungen der Einrichtung wahlweise freigeb- und absperrbar sind, und mit einem Zentralgerät zur Steuerung und Kontrolle der Betriebszustände und Arbeitsabläufe der Fütterungseinrichtung, dadurch gekennzeichnet, daß in der Verbraucherleitung (14) ein Paar Trennkörper (33,34) vorgesehen ist, die mit der Rohrwand in Dichtungseingriff stehen und mittels des von der Förderpumpe (8) geförderten Fördermediums aus ihrer Ausgangsstellung am Anfang der Verbraucherleitung (14) in wählbare Endstellungen innerhalb der Verbraucherleitung (14) und aus diesen zurück in ihre Ausgangsstellung verschiebbar sind.

2. Einrichtung nach Anspruch 1, dadurch gekennzeichnet, daß die beiden Trennkörper (33,34) in ihrer Ausgangsstellung am Anfang der Verbraucherleitung (14) dicht hintereinander angeordnet sind und die Verbraucherleitung (14) wahlweise stromauf des in Ausgangsstellung befindlichen ersten Trennkörpers (33) stromauf des in Ausgangsstellung befindlichen zweiten Trennkörpers (34) oder stromab der Abzweigung (26) für die letzte Verbraucherstelle von der Förderpumpe (8) mit Fördermedium beaufschlagbar ist.

3. Einrichtung nach Anspruch 1 oder 2, dadurch gekennzeichnet, daß der Speicherbehälter (2) über eine bodenseitige Verbindungsleitung (52) mit der Hauptvorlaufleitung (5) auf der Saugseite der Förderpumpe (8) verbindbar ist.

4. Einrichtung nach einem der Ansprüche 1 bis 3, dadurch gekennzeichnet, daß der Speicherbehälter (2) über eine im Abstand oberhalb des Bodens ausmündende Umgehungsleitung (55) mit der Hauptvorlaufleitung (5) auf der Saugseite der Förderpumpe (8) verbindbar ist.

5. Einrichtung nach einem der Ansprüche 1 bis 4, dadurch gekennzeichnet, daß ein von einer Wiegevorrichtung (4) kontrollierter Zusatzbehälter (3) für Wasser vorgesehen und über eine Verbindungsleitung (50) mit der Hauptvorlaufleitung (5) auf der Saugseite der Förderpumpe (8) verbindbar ist.

6. Einrichtung nach Anspruch 5, dadurch gekennzeichnet, daß der Zusatzbehälter (3) als Abteil des Mischbehälters (1) ausgebildet ist.

7. Einrichtung nach einem der Ansprüche 1 bis 6, dadurch gekennzeichnet, daß die Verbraucherleitung (14) über Leitungsverbindungen (44; 40) wahlweise mit dem Zusatzbehälter (3) oder dem Mischbehälter (1) verbindbar ist.

8. Einrichtung nach einem der Ansprüche 1 bis 7, dadurch gekennzeichnet, daß die Trennkörper (33, 34) einen biegsamen Mittelteil (68) und eine Anzahl von auf diesem angeordneten Dichtungsscheiben (69-72) umfaßt.

9. Einrichtung nach Anspruch 8, dadurch gekennzeichnet, daß der Mittelteil eine Drahtseele (68), und auf dieser angeordnete Distanzhülsen (73-78) umfaßt, zwischen denen die Dichtungsscheiben (69-72) abgestützt sind.

10. Einrichtung nach Anspruch 8 oder 9, dadurch gekennzeichnet, daß zumindest einer der Trennkörper (33,34) einen Signalgeber (81) aufweist.

11. Einrichtung nach Anspruch 10, dadurch gekennzeichnet, daß der Signalgeber (81) von einem auf dem Mittelteil abgestützten Dauermagneten gebildet ist.

12. Einrichtung nach Anspruch 10 dadurch gekennzeichnet, daß der Signalgeber (81) von einem auf dem Mittelteil abgestützten aktiven oder passiven Sender gebildet ist.

13. Einrichtung nach einem der Ansprüche 1 bis 12, dadurch gekennzeichnet, daß zumindest entlang der Verbraucherleitung Signalempfänger (64,65,66) vorgesehen sind.

14. Einrichtung nach einem der Ansprüche 1 bis 13, dadurch gekennzeichnet, daß zumindest einer der Trennkörper (33,34) einen Signalempfänger und einen abfragbaren Signalspeicher aufweist.

**Claims**

1. A feeding device for preparing and delivering pumpable cattle fodder mixtures to consuming points, having a mixing tank (1) which comprises a weighing device (4) and an agitator and can be filled with fodder constituents from storage bins, having a main flow line (5) into which a feed pump (8) and a fliow meter device (7) are connected, having at least one service line (14) to which a pumpable flow medium can be admitted from the main flow line (5) and which has branches (17–26) to consuming points, having a storage tank (2) which can be filled with water from the service line (14), having a plurality of control valves by means of which the pipelines of the device can be selectively freed and shut off, and having a central unit for the control and monitoring of the operating states and working cycles of the feeding device, characterised in that provided in the service line (14) is a pair of separating members (33, 34) which are in sealing engagement with the pipe wall and can be displaced, by means of the flow medium delivered by the feed pump (8), out of their initial position at the beginning of the service line (14) into selective end positions inside the service line (14) and back out of these into their initial position.

2. A device according to Claim 1, characterised in that the two separating members (33, 34) are arranged close one behind the other in their initial position at the beginning of the service line (14), and flow medium from the feed pump (8) can be admitted to the service line (14) selectively upstream of the first separating member (33) which is in the initial position, upstream of the second separating member (34) which is in the initial position, or downstream of the branch (26) for the last consuming point.

3. A device according to Claim 1 or 2, characterised in that the storage tank (2) can be connected, via a connecting line (52) at the bottom, to the main flow line (5) at the suction side of the feed pump (8).

4. A device according to any one of Claims 1 to 3, characterised in that the storage tank (2) can be connected, via a by-pass (55) opening at a distance above the bottom, to the main flow line (5) at the suction side of the feed pump (8).

5. A device according to any one of Claims 1 to 4, characterised in that an auxiliary tank (3) for water is provided which is monitored by a weighing device (4) and can be connected, via a connecting line (50), to the main flow line (5) at the suction side of the feed pump (8).

6. A device according to Claim 5, characterised in that the auxiliary tank (3) is constructed in the form of a compartment of the mixing tank (1).

7. A device according to any one of Claims 1 to 6, characterised in that the service line (14) can be selectively connected, via line connections (44, 40) to the auxiliary tank (3) or the mixing tank (1).

8. A device according to any one of Claims 1 to 7, characterised in that the separating members (33, 34) comprise a flexible middle portion (68) and a plurality of sealing washers (69–72) arranged on this.

9. A device according to Claim 8, characterised in that the middle portion comprises a wire core (68) and distance sleeves (73–78) arranged on this, between which sleeves the sealing washers (69–72) are supported.

10. A device according to Claim 8 or 9, characterised in that at least one of the separating members (33, 34) comprises a signal transmitter (81).

11. A device according to Claim 10, characterised in that the signal transmitter (81) is formed by a permanent magnet supported on the middle portion.

12. A device according to Claim 10, characterised in that the signal transmitter (81) is formed by an active or passive transmitter supported on the middle portion.

13. A device according to any one of Claims 1 to 12, characterised in that signal receivers (64, 65, 66) are provided at least along the service line.

14. A device according to any one of Claims 1 to 13, characterised in that at least one of the separating members (33, 34) comprises a signal receiver and a signal store which can be interrogated.

**Revendications**

1. Dispositif d'alimentation pour préparer et distribuer des mélanges de nourriture pompables pour le bétail jusqu'aux postes des utilisateurs, avec une cuve de mélange (1), qui comprend un dispositif de pesée (4) et un agitateur et qu'on peut alimenter depuis des cuves de réserve en composant d'aliments, avec une conduite principale de remplissage (5), sur laquelle sont branchées une pompe de circulation (8) et un dispositif débitmètre (7), avec au moins une conduite d'utilisateur (14) qu'on peut remplir, depuis la conduite de remplissage principale (5) d'un milieu pompable de transfert, et qui présente des dérivations (17–26) vers les postes des utilisateurs, avec un réservoir (2), qu'on peut alimenter en eau par l'intermédiaire de la conduite d'utilisateur (14) avec un certain nombre de vannes commandées, au moyen desquelles ou ouvre ou condamne à volonté les conduites du dispositif et avec une unité centrale pour commander et contrôler les états de fonctionnement et les étapes du processus du dispositif d'alimentaiton, caractérisé en ce qu'on a placé dans la conduite d'utilisateur (14) une paire de corps de séparation (33, 34) qui sont en étanchéité avec la paroi du tube et qu'on peut déplacer au moyen du milieu de transfert pompé par la pompe de circulation (8), de leur position de départ au début de la conduite d'utilisateur (14) jusqu'à des positions finales qu'on peut choisir à l'intérieur de la conduite d'utilisateur (14) et qu'on peut ramener des positions finales à la position de départ.

2. Dispositif selon la revendication 1, caractérisé en ce qu'on place les deux corps de séparation (33, 34) justes l'un derrière l'autre, à leur position de départ à l'entrée de la conduite d'utilisateur, et qu'on peut injecter du milieu de transfert à l'aide de la pompe de circulation (8) à volonté en amont du premier corps de séparation (33) se trouvant en position initiale, en amont du deuxième corps de séparation (34) se trouvant en position initiale ou en aval de la dérivation (26) du dernier poste d'utilisateur.

3. Dispositif selon la revendication 1 ou 2, caractérisé en ce qu'on peut relier le réservoir (2) par l'intermédiaire d'une conduite de liaison (52) du côté du fond à la conduite de remplissage principale (5) du côté aspiration de la pompe de circulation (8).

4. Dispositif selon l'une des revendications 1 à 3, caractérisé en ce qu'on peut relier le réservoir (2) par l'intermédiaire d'une conduite de dérivation (55) débouchant à une certaine distance au-dessus du fond, avec la conduite de remplissage principale (5) du côté aspiration de la pompe de circulation (8).

5. Dispositif selon l'une des revendications 1 à 4, caractérisé en ce qu'on a placé une cuve supplémentaire (3) contrôlée par un dispositif de pesée (4) pour l'eau et qu'on peut la relier par l'intermédiaire d'une conduite de liaison (50) à la conduite de remplissage principale (5) du côté aspiration de la pompe de circulation.

6. Dispositif selon la revendication 5, caractérisé en ce que la cuve supplémentaire (3) constitue un compartiment de la cuve de mélange (1).

7. Dispositif selon l'une des revendications 1 à 6, caractérisé en ce qu'on peut relier à volonté la conduite d'utilisateur (14) par l'intermédiaire des liaisons de conduite (44; 40) à la cuve supplémentaire (3) ou à la cuve de mélange (1).

8. Dispositif selon l'une des revendications 1 à 7, caractérisé en ce que les corps de séparation (33, 34) comprennent une partie médiane (68) flexible et plusieurs disques d'étanchéité montés sur elle (69–72).

9. Dispositif selon la revendication 8, caractérisé en ce que la partie médiane comprend une âme en fils métalliques (68) et des bagues d'écartement (73, 78) disposées sur elle, entre lesquelles s'appuient les disques d'étanchéité (69–72).

10. Dispositif selon la revendication 8 ou 9, caractérisé en ce qu'au moins l'un des corps de séparation (33, 34) comprend un émetteur de signal (81).

11. Dispositif selon la revendicatlon 10, caractérisé en ce que, l'émetteur de signal (81) est constitué d'aimants permanents prenant appui sur la pièce médiane.

12. Dispositif selon la revendication 10, caractérisé en ce que l'émetteur de signal (81) est formé d'un émetteur actif ou passif déposé sur la pièce médiane.

13. Dispositif selon l'une des revendications 1 à 12, caractérisé en ce qu'on a disposé au moins, le long de la conduite d'utilisateur des capteurs de signaux (64, 65, 66).

14. Dispositif selon l'une des revendications 1 à 13, caractérisé en ce qu'au moins l'un des corps de séparation (33, 34) comprend un capteur de signal et une mémoire de signal interrogeable.

Fig.1

Fig. 2

EP 0 296 260 B1